(19) Europäisches Patentamt
European Patent Office
Office européen des brevets

(11) **EP 2 003 018 A2**

(12) **EUROPEAN PATENT APPLICATION**

(43) Date of publication:
**17.12.2008 Bulletin 2008/51**

(51) Int Cl.:
**B60R 1/00** (2006.01)   **B60R 11/04** (2006.01)
**B60R 11/00** (2006.01)

(21) Application number: **08010743.6**

(22) Date of filing: **12.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007158785**

(71) Applicant: **Sanyo Electric Co., Ltd.**
**Moriguchi-shi, Osaka (JP)**

(72) Inventors:
• **Asari, Keisuke**
  **Moriguchi City**
  **Osaka, 570-8677 (JP)**
• **Kuwata, Kaihei**
  **Moriguchi City**
  **Osaka, 570-8677 (JP)**

(74) Representative: **Glawe, Ulrich**
**Glawe, Delfs, Moll**
**European Patent Attorneys**
**Postbox 26 01 62**
**80058 Munich (DE)**

(54) **Camera system and mechanical apparatus**

(57)     A camera system includes a camera unit for obtaining an image of a periphery of a rotating body that is capable of performing a rotating motion, and an image processing device (2) for generating a display image based on a camera image obtained by the camera unit (1), so that the display image is delivered to a display device (3). The image processing device generates the display image in such a manner that a specific image area corresponding to an outer periphery position in a movable range of the rotating body when the rotating body rotates can be recognized visually on a display screen of the display device (3).

## FIG.1

**Description**

**BACKGROUND OF THE INVENTION**

**Field of the Invention**

The present invention relates to a camera system for providing an image based on camera photography. In particular, the present invention relates to a camera system for assisting a field of view of a periphery of a crane mechanical apparatus and the like. In addition, the present invention relates to a mechanical apparatus utilizing the camera system.

**Description of Related Art**

In recent years, in connection with an increase of awareness about safety, there is a tendency to equip a car or other vehicles with a camera, and various systems for assisting confirmation of safety based on a camera image obtained by the camera are proposed. For example, there is a known system for a passenger car, in which a camera image is displayed together with auxiliary lines indicating car width or a distance from the rear end of the car, which is superimposed on the camera image (see JP-A-2005-186906, JP-A-2000-272445 and JP-A-2002-314991, for example). Display positions of the auxiliary lines are determined based on a fixed shape and dimensions of the passenger car. The display of these auxiliary lines is useful for grasping a distance between the vehicle and an obstacle existing in the traveling direction of the vehicle or for deciding whether or not the vehicle will come in contact with the obstacle.

In addition, there is a known system for displaying a bird's eye view image obtained by converting a camera image of a vehicle into an image viewed vertically from above through viewpoint conversion, or a system for displaying the entire periphery of a vehicle obtained by pasting and combining a plurality of bird's eye view images based on a plurality of camera images (see JP-A-2002-125224, for example). Adopting the display system based on the bird's eye view image, it becomes easy to grasp a distance between the vehicle and an obstacle.

Furthermore, also in the construction machine industry, securing a field of view surrounding a machine is being required in accordance with a standard such as ISO (International Organization for Standardization) or a law. A system for a crane mechanical apparatus such as a movable crane equipped with a camera for security confirmation is proposed, but in this type of crane mechanical apparatus a security confirmation area to be noted changes in accordance with an extending motion, a derricking motion and the like of a boom. In addition, a crane mechanical apparatus also performs a rotating motion unlike a passenger car. Therefore, even if the system that was designed for a passenger car is applied to a crane mechanical apparatus, it is difficult to assist visibility thereof sufficiently.

**SUMMARY OF THE INVENTION**

Therefore, it is an object of the present invention to provide a camera system contributing to easy confirmation of a periphery state of a rotating body in a crane mechanical apparatus or the like. In addition, it is another object of the present invention to provide a mechanical apparatus utilizing the camera system.

A camera system according to the present invention includes a camera unit for obtaining an image of a periphery of a rotating body that is capable of performing a rotating motion and an image processing device for generating a display image based on a camera image obtained by the camera unit, so that the display image can be delivered to a display device. The image processing device generates the display image in such a manner that a specific image area corresponding to an outer periphery position of the rotating body within its movable range due to rotation of the rotating body can be recognized visually on a display screen of the display device.

According to this structure, a relative position between the specific image area corresponding to the outer periphery position in the movable range of the rotating body and an obstacle or the like for the rotating body can be confirmed on the display screen. As a result, confirmation of a periphery state of the rotating body to be noted can be performed easily.

More specifically, for example, the rotating body has a rod-like main shaft member attached onto a rotating table that is capable of performing a rotating motion, in such a manner that the main shaft member can perform a derricking motion. The rotating body performs the rotating motion as the rotating table rotates. The outer periphery position may change in accordance with a state of the rotating body including a length of the main shaft member and a derricking angle of the main shaft member with respect to the rotating table. The image processing device may determine a position of the specific image area on the display image based on the state of the rotating body.

In addition, more specifically, for example, the image processing device generates the display image by superimposing an indicator corresponding to the outer periphery position on the camera image or by processing the camera image in accordance with the outer periphery position.

Instead of the above-mentioned structure, for example, it is possible to adopt another structure in which the image processing device includes a bird's eye view converter for converting the camera image into a bird's eye view image viewed from a viewpoint of a virtual camera, and the image processing device generates the display image by superimposing an indicator corresponding to the outer periphery position on the bird's eye view image or by processing the bird's eye view image in accordance with the outer periphery position.

In addition, for example, it is possible to adopt the structure in which the camera unit includes a plurality of cameras having different viewpoints for obtaining images of a periphery of the rotating body, and the image processing device includes a bird's eye view converter for converting each camera image into a bird's eye view image viewed from a viewpoint of a virtual camera and for generating a composite bird's eye view image by combining the individual bird's eye view images, so that the image processing device generates the display image by superimposing an indicator corresponding to the outer periphery position on the composite bird's eye view image or by processing the composite bird's eye view image in accordance with the outer periphery position.

In addition, for example, it is possible to adopt the structure in which the image processing device generates the display image so that a change in a size of the specific image area on the display image based on a change in a movable range of the rotating body can be suppressed when the movable range of the rotating body has changed.

According to this structure, it becomes possible to continue to display the image area to be noted particularly in an appropriate size in spite of a change of the movable range of the rotating body.

More specifically, for example, the image processing device suppresses the change in the size of the specific image area by altering a height of a viewpoint of the virtual camera in accordance with the change in the movable range of the rotating body when it has changed.

In addition, more specifically, for example, the main shaft member is a boom provided to a mechanical apparatus including a crane mechanical apparatus or a shovel vehicle.

In addition, a mechanical apparatus according to the present invention performs a rotating motion of the above-mentioned rotating body and is equipped with the above-mentioned camera system.

According to the present invention, it is possible to provide a camera system contributing to easy confirmation of a periphery state of a rotating body in a crane mechanical apparatus or the like.

Meanings and effects of the present invention will be apparent from the following description about embodiments of the present invention. However, the embodiments described below are merely examples of the present invention, and meanings of the present invention as well as meanings of terms of individual elements are not limited to those described in the following embodiments.

## BRIEF DESCRIPTION OF THE DRAWINGS

Fig. 1 is a general block diagram of a visibility assisting system according to a first embodiment of the present invention.
Fig. 2A is a side view showing an appearance of a crane mechanical apparatus equipped with the visibility assisting system shown in Fig. 1, and Fig. 2B is a plan view of the crane mechanical apparatus viewed from above.
Fig. 3 is a side view showing an appearance of the crane mechanical apparatus shown in Fig. 2A, together with symbols and the like related to generation of a display image.
Fig. 4 is a diagram showing a relationship between a coordinate system on an imaging surface of a camera and the world coordinate system according to the first embodiment of the present invention.
Fig. 5 is a diagram showing a relationship between the world coordinate system and the symbols and the like related to generation of the display image.
Fig. 6 is a flowchart showing an operating procedure of the visibility assisting system according to the first embodiment of the present invention.
Fig. 7 is a diagram showing a relationship between the world coordinate system and the symbols and the like related to generation of the display image.
Fig. 8 is a diagram showing an example of an image displayed by the visibility assisting system according to the first embodiment of the present invention.
Fig. 9 is a diagram showing an example of the image displayed by the visibility assisting system according to the first embodiment of the present invention.
Fig. 10 is a flowchart showing an operating procedure of the visibility assisting system according to a second embodiment of the present invention.
Fig. 11 is a diagram showing an example of the image displayed by the visibility assisting system according to the second embodiment of the present invention.
Fig. 12 is a diagram showing an example of the image displayed by the visibility assisting system according to the second embodiment of the present invention.
Fig. 13 is a diagram showing an example of a camera image and a bird's eye view image obtained by the visibility assisting system according to a third embodiment of the present invention.

Fig. 14 is a general block diagram of the visibility assisting system according to a fourth embodiment of the present invention.

Fig. 15A is a side view showing an appearance of the crane mechanical apparatus equipped with the visibility assisting system shown in Fig. 14, and Fig. 15B is a plan view of the crane mechanical apparatus viewed from above.

Fig. 16 is a plan view of the crane mechanical apparatus viewed from above according to the fourth embodiment of the present invention, together with views of the individual cameras.

Fig. 17 is a flowchart showing an operating procedure of the visibility assisting system according to the fourth embodiment of the present invention.

Fig. 18 is a diagram showing individual bird's eye view images on an all-around bird's eye view coordinate system obtained by the visibility assisting system shown in Fig. 14.

Fig. 19 is a diagram showing an example of an image displayed by the visibility assisting system shown in Fig. 14.

Fig. 20 is a diagram showing an example of the image displayed by the visibility assisting system shown in Fig. 14.

Fig. 21 is a diagram showing an example of the image displayed by the visibility assisting system shown in Fig. 14.

Fig. 22 is a side view showing an appearance of a crane mechanical apparatus according to a fifth embodiment of the present invention, to which the visibility assisting system of the present invention is applied.

## DETAILED DESCRIPTION OF THE PREFERRED EMBODIMENTS

Hereinafter, embodiments of the present invention will be described concretely with reference to the attached drawings. In the individual drawings, the same parts are denoted by the same reference symbols so that overlapping descriptions of the same parts are omitted as a general rule.

In the following description, the ground is regarded to be parallel to the horizontal plane. In addition, the term "height" referred to simply means a height from the ground.

First embodiment

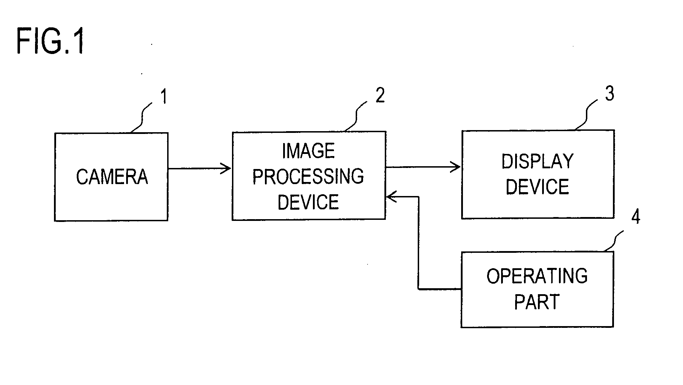

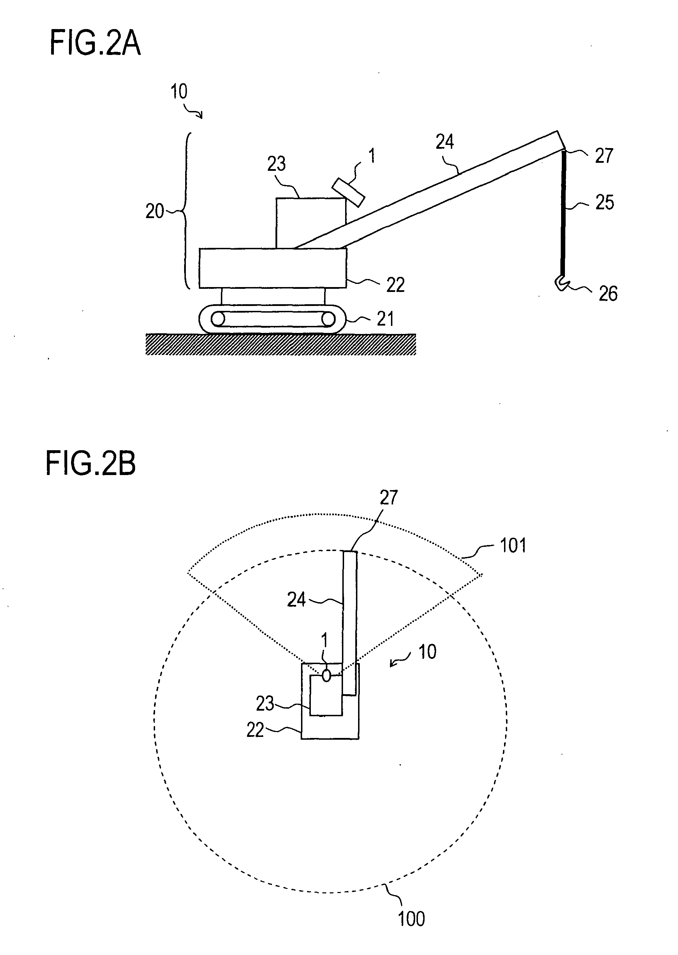

A first embodiment of the present invention will be described with reference to Figs. 1, 2A and 2B. Fig. 1 is a general block diagram of a visibility assisting system according to the first embodiment. The visibility assisting system shown in Fig. 1 includes a camera 1, an image processing device 2, a display device 3 and an operating part 4.

Fig. 2A is a side view showing an appearance of a crane mechanical apparatus 10 equipped with the visibility assisting system shown in Fig. 1, and Fig. 2B is a plan view of the crane mechanical apparatus 10 viewed from above.

The crane mechanical apparatus 10 is a movable crane, which is exemplified by a crawler crane in the present embodiment. The crane mechanical apparatus 10 includes a lower running gear 21 (hereinafter referred to as a running gear 21 simply) as the crawler, an upper rotating table 22 (hereinafter referred to as a rotating table 22 simply), a cockpit box 23, and a boom 24. In addition, the crane mechanical apparatus 10 is equipped with a wire 25 and a hook 26, too. The rotating table 22, the cockpit box 23 and the boom 24 constitute a machine body 20 Note that the boom 24 may also be called an arm.

The running gear 21 travels on the ground, so that the entire of the crane mechanical apparatus 10 is moved. However, it is regarded that the running gear 21 is standing still in the present embodiment and other embodiments described later. The machine body 20 including the rotating table 22 is placed on the running gear 21 so it is capable of rotating around the predetermined pivot axis that passes through a connection part between the running gear 21 and the rotating table 22 and is parallel to a plumb line. The boom 24 rotates around the pivot axis as the rotating table 22 rotates.

The cockpit box 23 and the boom 24 are placed on the rotating table 22. The boom 24 is a telescopic boom whose length can be expanded and contracted. The boom 24 is attached onto the rotating table 22 in such a manner that it can perform a derricking motion, and the derricking angle of the boom 24 with respect to the rotating table 22 (an angle $\theta_A$ described later) can be changed within a predetermined angle range. Note that the boom 24 can also be a boom having a fixed length.

The boom 24 is an elongated rod-like member, and an end thereof is fixed to the rotating table 22. On the other hand, the wire 25 is hung vertically downward from a distal end part 27 of the boom 24 including the other end of the boom 24 in such a manner that it can be wound up and down. The lower end of the wire 25 is provided with the hook 26. When the wire 25 is wound up in the state where a load (not shown) is hung by the hook 26 and the machine body 20 including the rotating table 22 is moved to rotate, the load can be carried in the horizontal direction. Note that a thing other than the hook 26 may be attached to the lower end of the wire 25. For example, an iron ball (not shown) for crushing a building or the like may be attached to the lower end of the wire 25 instead of the hook 26.

In Fig. 2B, a broken curve line 100 shows an imaginary line drawn by the distal end part 27 of the boom 24 when the rotating table 22 rotates. The broken curve line 100 forms a circle.

An operator of the crane mechanical apparatus 10 operates an operating member disposed in the cockpit box 23 for instructing a travel motion by the running gear 21, a change in the length of the boom 24, a rotating motion of the rotating table 22, a change in the derricking angle of the boom 24 with respect to the rotating table 22, and winding up or down of the wire 25.

The machine body 20 is equipped with the camera 1 for obtaining an image of a periphery of the machine body 20. In the example shown in Figs. 2A and 2B, the camera 1 is disposed at the upper part of the cockpit box 23. However, it is possible to provide the camera 1 to the rotating table 22 or to the boom 24.

For example, a camera using a CCD (Charge Coupled Devices) or a camera using a CMOS (Complementary Metal Oxide Semiconductor) image sensor can be used as the camera 1. The image processing device 2 can be made up of an integrated circuit, for example. The display device 3 is made up of a liquid crystal display panel or the like. The image processing device 2, the display device 3 and the operating part 4 are disposed at the vicinity of a control seat in the cockpit box 23. In particular, the display device 3 is placed in such a manner that the operator of the crane mechanical apparatus 10 can visually recognize a display screen of the display device 3.

The camera 1 obtains an image of a subject (including the ground) at a periphery of the machine body 20 and delivers a signal representing the obtained image (hereinafter referred to as a camera image) to the image processing device 2. In particular, the camera 1 is placed in such a manner that a point of intersection of the plumb line passing through the distal end part 27 and the ground is included in the field of view of the camera 1. Desirably, the hook 26 is within the field of view of the camera 1. In Fig. 2B, a broken lined sector area 101 shows the field of view of the camera 1.

The image processing device 2 generates an output image to the display device 3, i.e., a display image from the camera image. A video signal indicating this display image is supplied to the display device 3, and the display device 3 displays the display image as a picture. The operating part 4 receives an operation from a user and transmits a signal corresponding to contents of the operation to the image processing device 2. The camera 1 obtains the camera image at a predetermined frame period (e.g., a period of 1/60 seconds). For example, every time when a new camera image is obtained, a display image is generated from the new camera image so that display contents of the display device 3 is updated.

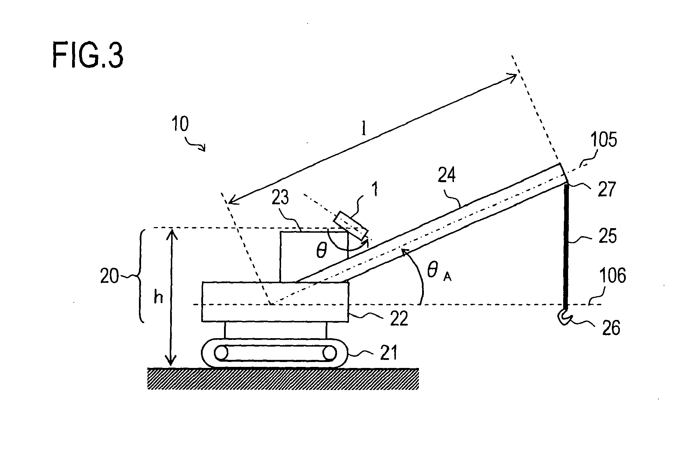

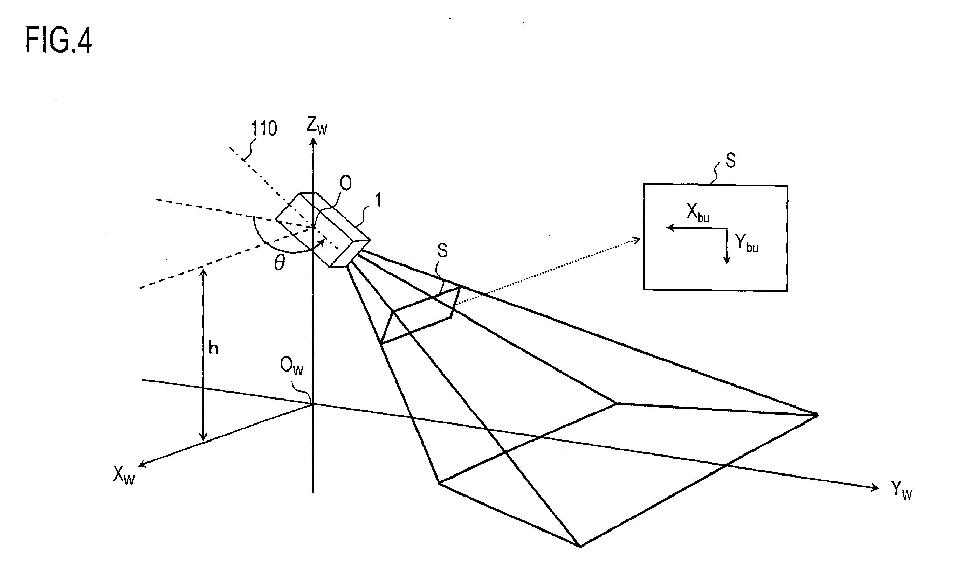

With reference to Figs. 3 and 4, physical quantities, symbols and the like related to generation of the display image will be described.

Fig. 3 is a side view showing an appearance of the crane mechanical apparatus 10, together with symbols indicating the physical quantities. The boom 24 is regarded as a rectangular solid, and an acute angle formed between a central axis 105 of the boom 24 in the longitudinal direction and a predetermined reference plane 106 is represented by $\theta_A$ The angle $\theta_A$ indicates the derricking angle (boom angle) of the boom 24 with respect to the rotating table 22, which is referred to as a boom derricking angle. The reference plane 106 is parallel to a rotation plane of the rotating table 22. The rotating table 22 performs the rotating motion along the rotation plane. Basically, the rotation plane is parallel to the horizontal plane, and the case where the rotation plane is parallel to the horizontal plane is considered.

The longitudinal direction of the boom 24 is the direction connecting an end of the boom 24 fixed to the rotating table 22 and the distal end part 27 including the other end of the boom 24. A length of the boom 24 in the longitudinal direction of the boom 24 (a length between an end and the other end of the boom 24) is represented by "1", which is referred to as a boom length.

In addition, there are two angles, i.e., an acute angle and an obtuse angle formed between the horizontal plane and an optical axis of the camera 1. The obtuse angle out of the two angles is represented by $\theta$, and the angle $\theta$ is regarded as a tilt angle of the camera 1 with respect to the horizontal plane. Note that an angle (180 degrees minus $\theta$) is referred to as an angle of depression in general. Further, a height of the camera 1 (more specifically, a height of an optical center of the camera 1) is represented by "h".

Fig. 4 shows a relationship between a coordinate system on an imaging surface S of the camera 1 and the world coordinate system. The coordinate system of the imaging surface S is a two-dimensional coordinate system having $X_{bu}$ axis and $Y_{bu}$ axis as its coordinate axes. The world coordinate system is a three-dimensional coordinate system having $X_w$ axis, $Y_w$ axis and $Z_w$ axis as its coordinate axes. Fig. 4 shows the imaging surface S in an imaginary manner.

As to the coordinate system of the imaging surface S, the origin thereof is placed at the center on the imaging surface S, the $X_{bu}$ axis extends in the lateral direction on the imaging surface S, and the $Y_{bu}$ axis extends in the vertical direction on the imaging surface S. The origin $O_w$ of the world coordinate system coincides with a point of intersection of a plumb line passing through an optical center O of the camera 1 and the ground. The $X_w$ axis, the $Y_w$ axis and the $Z_w$ axis are orthogonal to each other. The $X_w$ axis, the $Y_w$ axis and the $Z_w$ axis intersect at the origin $O_w$. A plane including the origin $O_w$ and is parallel to both the $X_w$ axis and the $Y_w$ axis is the ground, and the direction of the $Z_W$ axis coincides with the height direction. Therefore, a parallel movement distance between the origin $O_w$ and the optical center O is "h".

An optical axis 110 of the camera 1 exists on the plane that includes the optical center O as well as the origin $O_w$ and is parallel to the $Z_w$ axis as well as the $Y_w$ axis. Furthermore, the obtuse angle formed between the optical axis 110 and the horizontal plane is the above-mentioned tilt angle $\theta$.

Coordinates of each point in the coordinate system of the imaging surface S are represented by $(x_{bu}, y_{bu})$, and coordinates of each point in the world coordinate system are represented by $(x_w, y_w, z_w)$. In the coordinate system of the imaging surface S, $x_{bu}$ and $y_{bu}$ of a certain point are respectively an $X_{bu}$ axis component and a $Y_{bu}$ axis component of the coordinates of the point. In the world coordinate system, $x_w$, $y_w$ and $z_w$ of a certain point are respectively an $X_w$ axis component, a $Y_w$ axis component and a $Z_W$ axis component of the coordinates of the point.

An arbitrary point on the world coordinate system is projected to a point on the coordinate system of the imaging surface S by means of perspective projection. This projection can be expressed by the equation (1) below. Here, P is a matrix with three rows and four columns, which is usually called a perspective projection matrix. As known well, the matrix P is identified uniquely by camera parameters including a height h, the tilt angle θ and a focal length f of the camera 1. It is regarded that the camera parameters are previously known to the image processing device 2, and the image processing device 2 uses the matrix P based on the camera parameters and can project an arbitrary point on the world coordinate system to a point on the coordinate system of the imaging surface S in accordance with the equation (1).

$$\begin{pmatrix} x_{bu} \\ y_{bu} \\ 1 \end{pmatrix} = P \begin{pmatrix} x_w \\ y_w \\ z_w \\ 1 \end{pmatrix} \qquad \cdots(1)$$

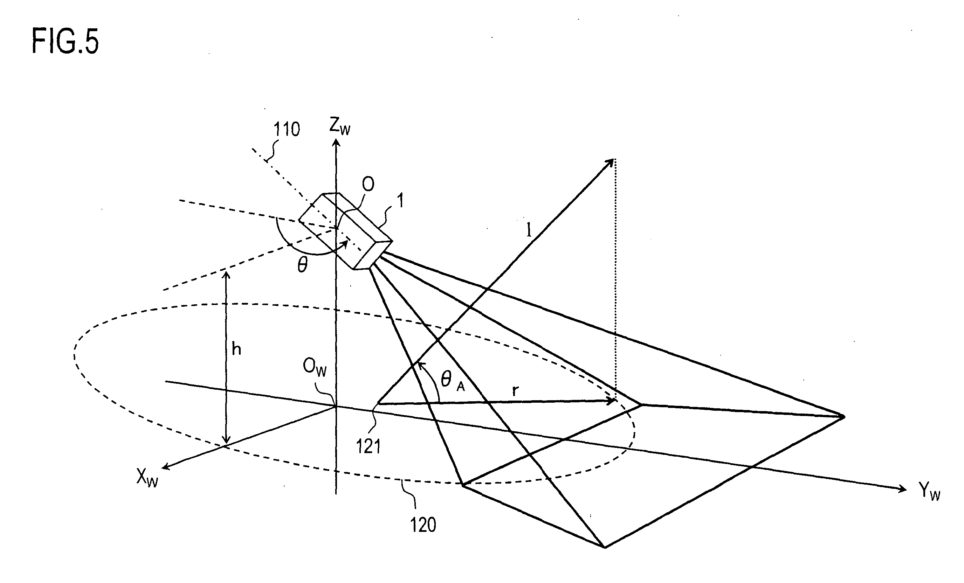

Further, Fig. 5 will be referred to. In Fig. 5, reference numeral 120 denotes a projection curve of a figure drawn by the distal end part 27 of the boom 24 when the rotating table 22 rotates, which is projected to the ground. Note that Fig. 5 shows the world coordinate system in the same manner as in Fig. 4. The projection curve 120 forms a circle. When a radius of the circle is denoted by r, "$r = 1 \cdot \cos\theta_A$" holds. The center 121 of the circle formed by the projection curve 120 exists on the pivot axis of the boom 24, and the center 121 may or may not coincide with the origin $O_w$. The radius r indicates a radius of a movable range of the boom 24 when the machine body 20 including the rotating table 22 rotates, and the projection curve 120 indicates an outer periphery of the movable range.

According to the present embodiment, the display image is generated from the camera image in such a manner that a security confirmation area (a specific image area) corresponding to the radius r can be visually identified, and the display image is displayed. The security confirmation area is an area to be noted about whether or not an obstacle exists in it. According to the present embodiment, the security confirmation area is distinguished from other areas by a guide line so as to be visually identified.

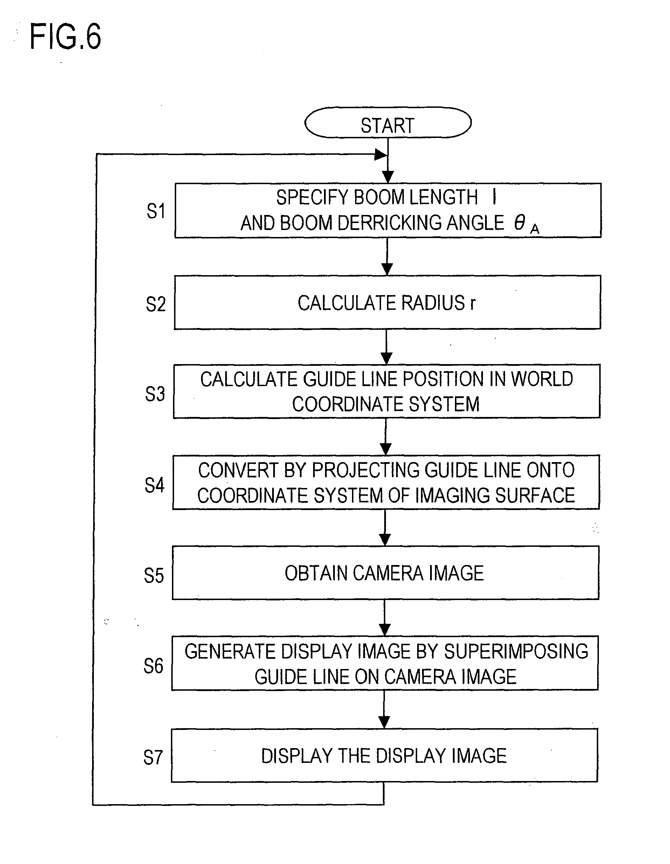

An operating procedure of the visibility assisting system shown in Fig. 1 corresponding to the above description will be described with reference to Fig. 6. Fig. 6 is a flowchart showing the operating procedure. The processes in steps S1 to S4 and S6 are performed by the image processing device 2, the process in step S5 is performed by the camera 1 and the image processing device 2, and the process in step S7 is performed by the display device 3.

First in the step S1, the image processing device 2 specifies the boom length 1 and the boom derricking angle $\theta_A$. As a method of specifying them, any known specifying method can be used.

For example, the boom length 1 and the boom derricking angle $\theta_A$ can be determined automatically by the method described in JP-A-H7-61777. It is also possible to utilize a boom derricking angle detector (not shown) that is provided inherently as a safety device to the crane mechanical apparatus 10, so that the boom derricking angle $\theta_A$ can be detected.

In addition, for example, it is possible to give the boom length 1 and the boom derricking angle $\theta_A$ to the image processing device 2 manually. In this case, information indicating the current boom length 1 and the current boom derricking angle $6_A$ is given to the image processing device 2 by operating the operating part 4 shown in Fig. 1, and the image processing device 2 specifies the boom length I and the boom derricking angle $\theta_A$ based on the information. Note that it is possible to give a fixed value of the boom length 1 to the image processing device 2 in advance if the boom length 1 is determined fixedly in advance.

In step S2 after the step S1, the above-mentioned radius r is calculated by using the boom length 1 and the boom derricking angle $\theta_A$ specified in the step S1 in accordance with the calculation equation "$r = 1 \cdot \cos\theta_A$". After that, the process goes to the step S3.

When the radius r is obtained, a position of a guide line to be drawn on the world coordinate system can be determined. More specifically, the process is as follows. In the step S3, coordinate values on the world coordinate system of the figure drawn by the distal end part 27 of the boom 24 when the rotating table 22 rotates is determined based on the radius r calculated in the step S2 and known information specifying a relative position between the camera 1 and the boom 24. This figure is referred to as a rotation outer periphery figure for convenience sake. This rotation outer periphery figure forms a cylinder having a cross section of the projection curve 120 shown in Fig. 5 when the coordinate value $z_w$ in the $Z_w$ axis direction is arbitrary while it forms the projection curve 120 shown in Fig. 5 when the coordinate value $z_w$ is zero. Note that a coordinate value in the $X_w$ axis direction and a coordinate value in the $Y_W$ axis direction of the center 121 shown in Fig. 5 are determined by the above-mentioned known information specifying the relative position between the camera 1 and the boom 24. This known information is given to the image processing device 2 in advance.

In the step S3, coordinate values on the world coordinate system of the guide line to be drawn are determined finally. For example, the coordinate values on the world coordinate system of the rotation outer periphery figure are regarded as the coordinate values on the world coordinate system of the guide line. In this case, it is regarded normally that the coordinate value $z_w$ is zero and the projection curve 120 is the guide line on the world coordinate system.

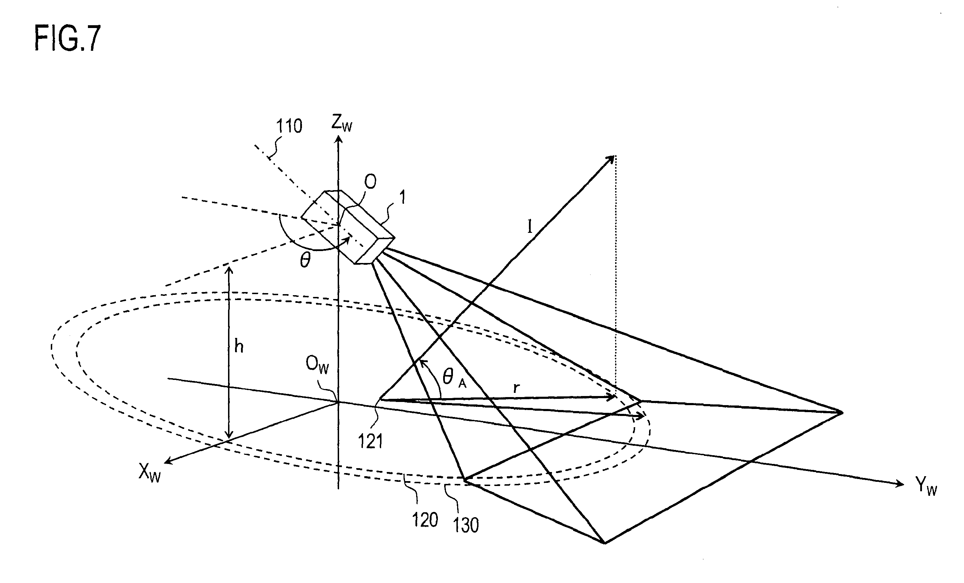

In addition, for example, it is possible to assume an imaginary circle 130 having a larger radius than the radius r as shown in Fig. 7 considering safety against a collision accident or the like, so that coordinate values on the world coordinate system of the imaginary circle 130 are regarded as the coordinate values on the world coordinate system of the guide line. In Fig. 7, the imaginary circle 130 is a circle defined on the plane on which the projection curve 120 is drawn, and the center of the imaginary circle 130 coincides with the center 121 of the circle formed by the projection curve 120. If the imaginary circle 130 is handled as the guide line on the world coordinate system, it is sufficient that coordinate values on the world coordinate system of the imaginary circle 130 are determined in the step S3, so it is not necessary to determine coordinate values on the world coordinate system of the rotation outer periphery figure.

In the step S4 after the step S3, the guide line on the world coordinate system that was determined in the step S3 is converted by projection onto the coordinate system of the imaging surface S. More specifically, coordinate values $(x_w, y_w, z_w)$ of each point on the guide line on the world coordinate system is converted into coordinate values $(x_{bu}, y_{bu})$ on the coordinate system of the imaging surface S in accordance with the above equation (1), and a figure made up of points having individual coordinate values $(x_{bu}, y_{bu})$ obtained by the conversion is regarded as the guide line on the coordinate system of the imaging surface S. When the conversion based on the equation (1) is performed, the coordinate value $z_w$ is regarded to be zero in general.

Then, in the following step S5, the image processing device 2 obtains the camera image from the camera 1. Since a distortion is usually generated in the camera image in the case where a wide angle lens is used in the camera 1 or other case, lens distortion correction is performed. Since the coordinate system of the imaging surface S is a coordinate system defined under the assumption that the camera 1 is a pinhole camera without distortion, the camera image after the lens distortion correction is to be a camera image on the coordinate system of the imaging surface S of the camera 1.

After that, the display image is generated in the step S6 by superimposing the guide line having individual coordinate values $(x_{bu}, y_{bu})$ determined in the step S4 on the camera image obtained in the step S5 (the camera image after the lens distortion correction). This display image is displayed on the display screen of the display device 3 in the step S7. After the step S7, the process goes back to the step S1 so that the individual processes in the steps S1-S7 are performed repeatedly.

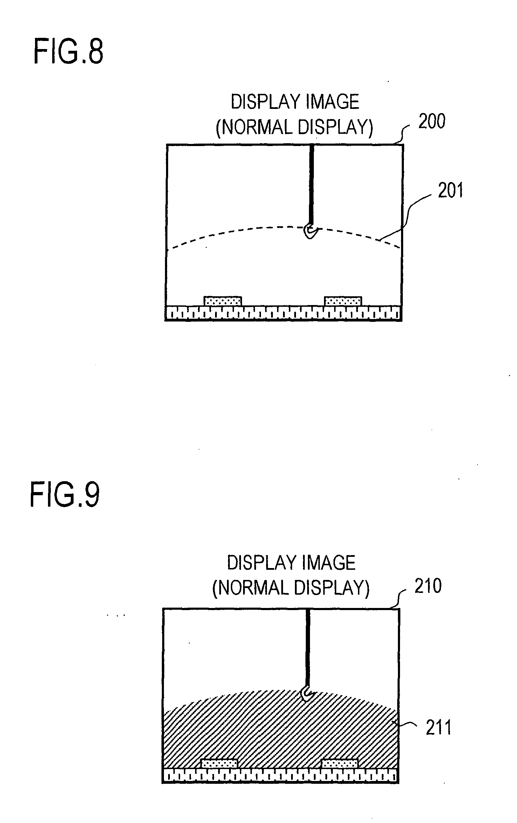

Fig. 8 shows an example of the display image that is generated and displayed in the steps S6 and S7. The image denoted by reference numeral 200 is the display image. A part of the rotating table 22 and a part of the running gear 21 are drawn in the lower part of the display image 200 while a part of the wire 25 and the hook 26 are drawn in the middle part of the display image 200. In the display image 200, the broken lined arc denoted by reference numeral 201 is the superimposed guide line. By selecting appropriate color of the guide line, the guide line can be distinguished from other image area easily for visual recognition. In order to discriminate the display from a "bird's eye view display" described in a second embodiment later, a term "normal display" is used for convenience sake in Fig. 8.

When the boom 24 is rotated along with the rotation of the machine body 20 including the rotating table 22, the hook 26 is moved along the guide line 201 in general. The area that is closer to the crane mechanical apparatus 10 than the guide line 201 is the security confirmation area to be noted about whether or not an obstacle exists in it, and a relative position or the like between the security confirmation area and an obstacle can be recognized on the image when the guide line 201 is displayed. As a result, a field of view of the operator is assisted so that security can be enhanced. In addition, since the guide line is changed dynamically in accordance with current values of the boom length 1 and the boom derricking angle $\theta_A$, the operator can recognize the latest security confirmation area visually.

Since the boom 24 is disposed on the side of the cockpit box 23 in many cases as to the crane mechanical apparatus 10 shown in Figs. 2A and 2B, it is often difficult for the operator to confirm visually an obstacle existing on the lateral side of the boom 24. Therefore, it is very useful that the operator can recognize the security confirmation area on the display screen.

Although the guide line is displayed by superimposing it on the camera image after the lens distortion correction in the example described above, it is also possible to generate and display a display image including the camera image without the lens distortion correction (hereinafter referred to as an original image) on which the guide line is superimposed. The guide line to be superimposed on the original image can be obtained by performing an inverse conversion of the conversion for the lens distortion correction on the guide line to be obtained in the step S4 corresponding to the camera image after the lens distortion correction.

In addition, it is also possible to perform a process of changing a display color of the area that is closer to the crane mechanical apparatus 10 than the guide line (i.e., the security confirmation area) or other process instead of superimposing and displaying the guide line. For example, it is possible to generate and display a display image 210 as shown in Fig. 9. In order to distinguish the area that is closer to the crane mechanical apparatus 10 than the guide line from the other areas on the display image 210, a display color of the former area (i.e., the security confirmation area) is changed. A hatched area 211 shown in Fig. 9 is the security confirmation area. In order carry out this method, a video signal (a luminance signal and/or a color signal) of a part area corresponding to the security confirmation area in the camera image is processed based on the individual coordinate values $(x_{bu}, y_{bu})$ forming the guide line obtained in the step S4 so that the display image 210 is obtained in the step S6. Then, the camera image after the process is delivered to the display device 3. In any case, the display image is generated so that the security confirmation area based on the radius r can be recognized visually on the display screen in a distinguished manner from the other areas.

Second embodiment

Next, a second embodiment of the present invention will be described. A general block diagram of the visibility assisting system according to the second embodiment and the crane mechanical apparatus 10 to which the visibility assisting system is applied are the same as those in the first embodiment. The operating procedure of the visibility assisting system in the second embodiment is different from that in the first embodiment, but other structure is the same between the first and the second embodiments. Therefore, the description will be described only about the operating procedure. The description that is described above in the first embodiment can be also applied to the second embodiment as long as no contradiction arises.

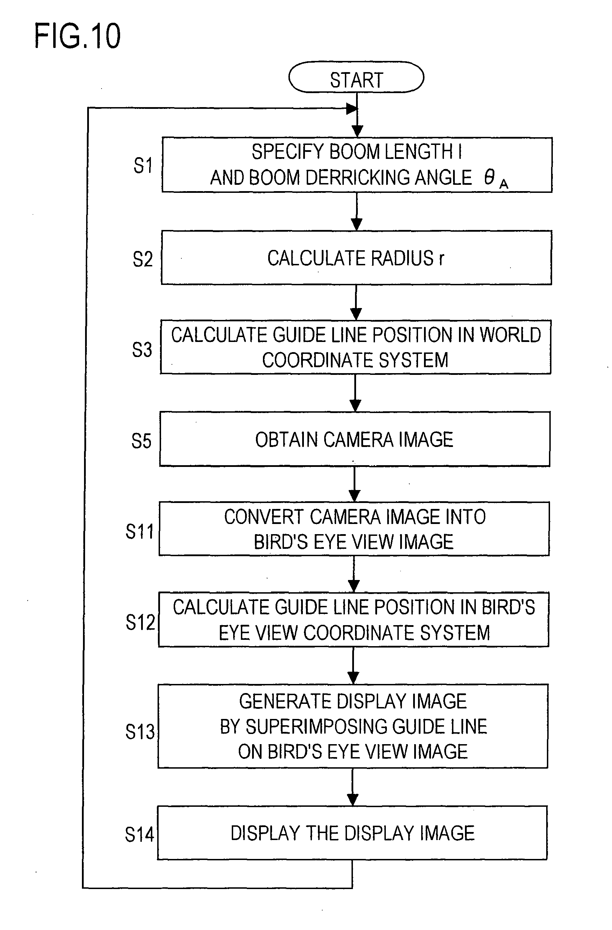

The operating procedure of the visibility assisting system according to the second embodiment will be described with reference to Fig. 10. Fig. 10 is a flowchart showing this operating procedure. Individual processes in steps S1 to S3 and S11 to S13 are performed by the image processing device 2, and a process in step S5 is performed by the camera 1 and the image processing device 2. A process in step S14 is performed by the display device 3.

First, the individual processes in the steps S1 to S3 are performed, and then a camera image is obtained in the step S5. The individual processes in the steps S1 to S3 and S5 are the same as those described above with reference to Fig. 6. As to the second embodiment, the process goes to the step S11 after the individual processes in the steps S1 to S3 and S5.

In the step S11, the camera image obtained in the step S5 is converted into the bird's eye view image. However, the lens distortion correction is performed on the camera image to be a base of the bird's eye view image, and the camera image after the lens distortion correction is converted into the bird's eye view image. The bird's eye view image is obtained by converting a real camera image from the camera 1 into an image viewed from a viewpoint of a virtual camera (a virtual viewpoint). More specifically, the bird's eye view image is obtained by converting the real camera image from the camera 1 into an image in which the ground surface is viewed from above in the plumb direction downward. This type of image conversion is also called a viewpoint conversion in general.

The bird's eye view image is defined on a two-dimensional bird's eye view coordinate system having coordinate axes to be an $X_{au}$ axis and a $Y_{au}$ axis that are orthogonal to each other. Coordinates of each point in the bird's eye view coordinate system are expressed in $(x_{au}, y_{au})$. The coordinate values $x_{au}$ and $y_{au}$ of a certain point in the bird's eye view coordinate system are respectively an $X_{au}$ axis component and a $Y_{au}$ axis component of the coordinates of the point. It is known that the equation for converting coordinates $(x_{bu}, y_{bu})$ of each point in the coordinate system of the imaging surface S into coordinates $(x_{au}, y_{au})$ in the bird's eye view coordinate system can be expressed as shown in the equation (2) below (see JP-A-2006-287892 for example). As described above, references f, h, $\theta$ and H respectively denote the focal length of the camera 1, the height of the camera 1, the tilt angle of the camera 1 and the height of the virtual camera (the height of the virtual viewpoint). In the second embodiment, the height H of the virtual camera is a fixed value.

$$\begin{bmatrix} x_{au} \\ y_{au} \end{bmatrix} = \begin{bmatrix} \dfrac{x_{bu}(fh\sin\theta + Hy_{au}\cos\theta)}{fH} \\ \dfrac{fh(f\cos\theta - y_{bu}\sin\theta)}{H(f\sin\theta + y_{bu}\cos\theta)} \end{bmatrix} \quad \cdots (2)$$

The image processing device 2 converts the coordinates $(x_{bu}, y_{bu})$ of each point on the camera image obtained in the step S5 into the coordinates $(x_{au}, y_{au})$ on the bird's eye view image in accordance with the equation (2), so as to generate the bird's eye view image. On this occasion, it is possible to prepare in advance a conversion table data indicating a relationship of association between the coordinates $(x_{bu}, y_{bu})$ and the coordinates $(x_{au}, y_{au})$ in accordance

with the equation (2), and to convert the camera image into the bird's eye view image by using the conversion table data. Note that it is also possible to convert the camera image into the bird's eye view image based on the above equation (1), the equation (3) that will be described later and the height H of the virtual camera (here, $z_w$ is regarded to be zero in the equation (1)).

$$\begin{bmatrix} x_{au} \\ y_{au} \end{bmatrix} = \frac{f}{H} \begin{bmatrix} x_w \\ y_w \end{bmatrix} \qquad \cdots (3)$$

After the step S11, the process goes to the step S12. In the step S12, coordinate values of the guide line in the bird's eye view coordinate system is determined from the guide line in the world coordinate system obtained in the step S3. Here, the two-dimensional coordinate system having the coordinate axes to be the Xw axis and the $Y_w$ axis is referred to as a ground coordinate system. The ground coordinate system is a world coordinate system in which $z_w$ is zero. The guide line in the ground coordinate system forms the projection curve 120 shown in Fig. 5, for example. Since the guide line in the ground coordinate system is the guide line on the bird's eye view coordinate system, the coordinate values ($x_w$, $y_w$) out of the coordinate values ($x_W$, $y_w$, $z_w$) of the guide line in the world coordinate system is regarded as the coordinate values ($x_{au}$, $y_{au}$) of the guide line in the bird's eye view coordinate system as they are.

In the step S13 after that, the display image is generated by superimposing the guide line in the bird's eye view coordinate system having the individual coordinate values ($x_{au}$, $y_{au}$) obtained in the step S12 on the bird's eye view image obtained in the step S11. The generated display image is displayed on the display screen of the display device 3 in the step S14. After the step S14, the process goes back to the step S1, and the individual processes described above are performed repeatedly.

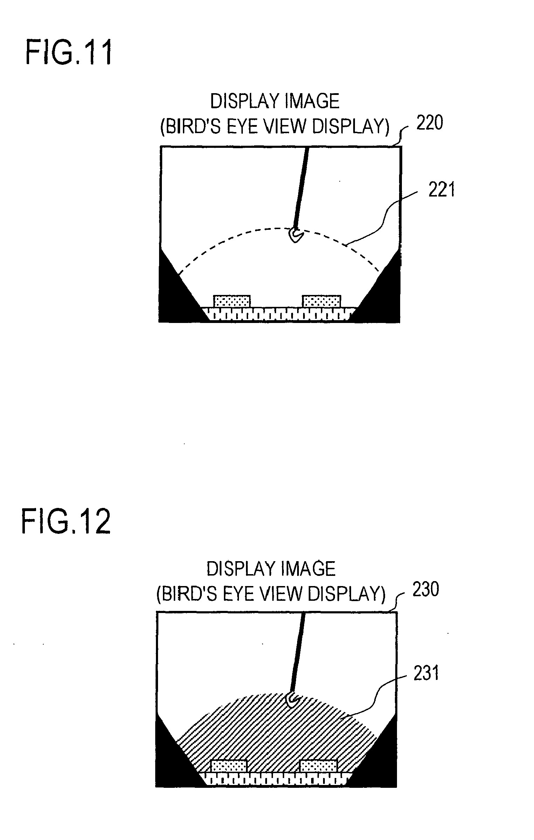

An example of the display image to be generated and displayed in the steps S13 and S14 is shown in Fig. 11. The image denoted by reference numeral 220 is the display image. A part of the rotating table 22 and a part of the running gear 21 are drawn in the lower part of the display image 220 while a part of the wire 25 and the hook 26 are drawn in the middle part of the display image 220. In addition, the areas filled in with black color in the left under part and the right under part of the display image 220 correspond to areas out of the field of view of the camera 1. In the display image 220, the broken lined arc denoted by reference numeral 221 is the superimposed guide line. Display color of the guide line is selected appropriately so that the guide line can be recognized visually in such a manner that it can be distinguished easily from other image areas. Thus, the same effect as that in the first embodiment can be obtained.

In addition, in the same manner as described above in the first embodiment, it is possible to perform a process for changing display color of the area that is closer to the crane mechanical apparatus 10 than the guide line (i.e., the security confirmation area) or other process instead of superimposing and displaying the guide line. For example, it is possible to generate and display a display image 230 as shown in Fig. 12. In the display image 230, the area that is closer to the crane mechanical apparatus 10 than the guide line can be distinguished from the other areas since display color of the former area (i.e., the security confirmation area) is changed. The hatched area 231 in Fig. 12 is the security confirmation area. In order to perform this method, a video signal (a luminance signal and/or a color signal) of a part area corresponding to the security confirmation area in the bird's eye view image is processed based on the individual coordinate values ($x_{au}$, $y_{au}$) forming the guide line obtained in the step S12 so that the display image 230 is obtained in the step S13. Then, the bird's eye view image after the process is delivered to the display device 3. In any case, the display image is generated so that the security confirmation area based on the radius r can be recognized visually on the display screen in such a manner that the security confirmation can be distinguished from the other areas.

Third embodiment

Furthermore, if the bird's eye view image is displayed as described above in the second embodiment, it is possible to provide the image that can contribute to the safety assistance by performing a zoom adjustment of the bird's eye view image. In the real space, the security confirmation area is viewed as small from a high viewpoint while it is viewed as large from a low viewpoint. In the same manner if the height H of the virtual camera used in the steps S11 and S12 shown in Fig. 10 is changed, a display size of the security confirmation area can be changed freely.

An embodiment in which such a change is performed will be described as a third embodiment. The third embodiment is different partially from the second embodiment, so a difference between the third and the second embodiments will be described below. Other than the part that will be described particularly in the third embodiment are the same as those in the second embodiment. In addition, the description that is described above in the first embodiment can be also applied to the third embodiment as long as no contradiction arises.

It is supposed that the image is obtained under a first and a second imaging condition. It is supposed that the

boom derricking angle $\theta_A$ in the second imaging condition is larger than the boom derricking angle $\theta_A$ in the first imaging condition. It is supposed that other conditions including the boom length 1 are the same between the first and the second imaging conditions.

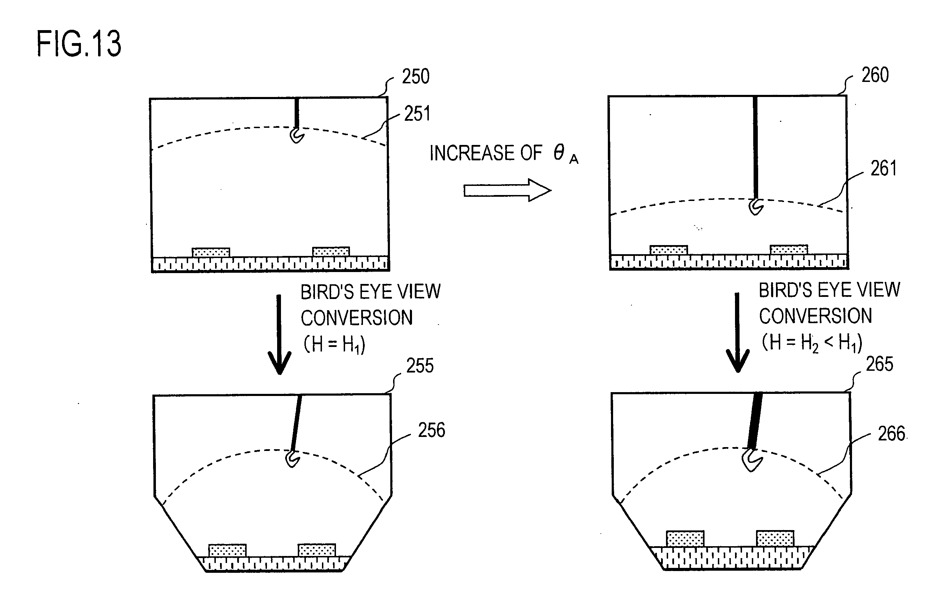

Fig. 13 is referred to. In Fig. 13, reference numeral 250 denotes a camera image obtained by the camera 1 under the first imaging condition while reference numeral 260 denotes another camera image obtained by the camera 1 under the second imaging condition. The broken lined arc denoted by reference numeral 251 is the guide line in the camera image 250, the broken lined arc denoted by reference numeral 261 is the guide line in the camera image 260.

It is understood that the boom derricking angle $\theta_A$ is different between the first and the second imaging condition, and therefore a size of the guide line in the camera image, i.e., a size of the security confirmation area in the entire camera image is different between the camera images 250 and 260. Since an important area for the security confirmation exists in the security confirmation area and in the vicinity of the security confirmation area, the safety assistance is enhanced more if the security confirmation area is displayed largely.

For this reason, a process of changing the height H of the virtual camera is performed when the bird's eye view image is generated, so that a size of the security confirmation area in the display screen should be constant substantially in spite of the change of the boom derricking angle $\theta_A$. More specifically, if the image is obtained under the first imaging condition, the height H of the virtual camera that is used in the steps S11 and S12 is set to $H_1$. In Fig. 13, reference numeral 255 denotes a bird's eye view image obtained from the camera image 250 under the condition of "$H = H_1$", and reference numeral 256 denotes a guide line in the bird's eye view image 255. In contrast, if the image is obtained under the second imaging condition, the height H of the virtual camera that is used in the steps S11 and S12 is set to $H_2$. In Fig. 13, reference numeral 265 denotes a bird's eye view image obtained from the camera image 260 under the condition of "$H = H_2$", and reference numeral 266 denotes a guide line in the bird's eye view image 265. Here, "$H_2 < H_1$" holds. If the camera image 250 is obtained, an image in which the guide line 256 is superimposed on the bird's eye view image 255 is delivered to the display device 3 and is displayed. If the camera image 260 is obtained, an image in which the guide line 266 is superimposed on the bird's eye view image 265 is delivered to the display device 3 and is displayed.

As described above, the height H of the virtual camera is adjusted so that a size of the security confirmation area on the display screen is controlled to be constant substantially. In this case, it is supposed that the movable range of the boom 24 (an outer periphery position of the movable range) is changed due to the change of the boom derricking angle $\theta_A$. Therefore, the height H of the virtual camera is changed dynamically in accordance with the change of the boom derricking angle $\theta_A$. If the boom length 1 is changed, the same process should be performed. In summary, if the movable range of the boom 24 (an outer periphery position of the movable range) is changed due to a change of at least one of the boom derricking angle $\theta_A$ and the boom length 1, the height H of the virtual camera is changed dynamically so that the change in the size of the security confirmation area on the display image due to the above-mentioned change can be canceled. In other words, the height H of the virtual camera is changed dynamically so that a ratio of the security confirmation area in the entire area of the display image should be constant substantially in spite of the change of the movable range of the boom 24. Thus, a size of the security confirmation area on the display screen is kept constant substantially.

Note that it is not necessary to cancel completely the change in the size of the security confirmation area on the display image, and it would be difficult to cancel it completely. Therefore, the term "cancel" about the change in a size of the security confirmation area on the display image includes a meaning of "suppress".

In addition, it is possible to obtain a similar display image by performing electronic zooming instead of changing the height H of the virtual camera. More specifically, for example, an image is obtained by superimposing the guide line on the image obtained by cutting out the entire or a part of the bird's eye view image obtained from the camera image with the fixed height H of the virtual camera, and the obtained image is displayed on the display device 3 as the display image. In this case, if the movable range of the boom 24 (an outer periphery position of the movable range) is changed, a position and a size of the image to be cut out from the entire bird's eye view image should be changed (i.e., a magnification of the electronic zooming should be changed) so that the change in the size of the security confirmation area on the display image due to the above-mentioned change can be canceled.

The method based on the electronic zooming can be applied to the first embodiment, too. If it is applied to the first embodiment, the image in which the guide line is superimposed on the image obtained by cutting out the entire or a part of the camera image is displayed on the display device 3 as a display image. If the movable range of the boom 24 (an outer periphery position of the movable range) is changed, a position and a size of the image to be cut out from the camera image should be changed (i.e., a magnification of the electronic zooming should be changed) so that the change in the size of the security confirmation area on the display image due to the above-mentioned change can be canceled.

Fourth embodiment

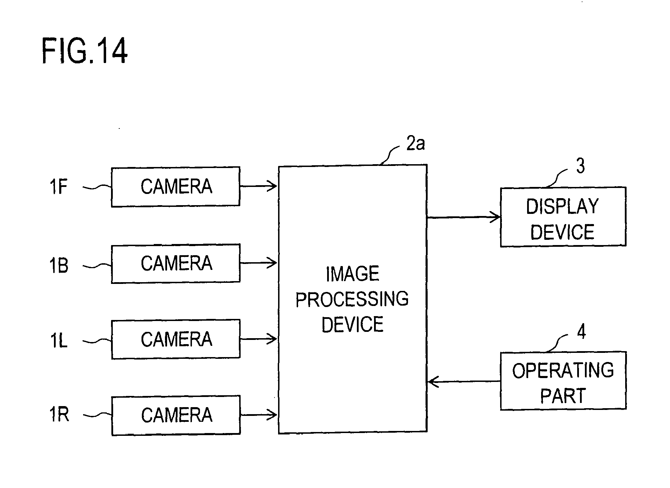

Next, a fourth embodiment will be described. The descriptions described in the first to the third embodiment can be applied to the present embodiment as long as no contradiction arises. When they are applied, a difference of a reference numeral between the elements having the same name (e.g., a difference between the reference numerals 2 and 2a) is neglected as appropriate. Fig. 14 is a general block diagram of the visibility assisting system according to the fourth embodiment. The visibility assisting system shown in Fig. 14 includes cameras 1F, 1B, 1L and 1R, an image processing device 2a, the display device 3 and the operating part 4. The camera 1F in the present embodiment corresponds to the camera 1 in the first to the third embodiments.

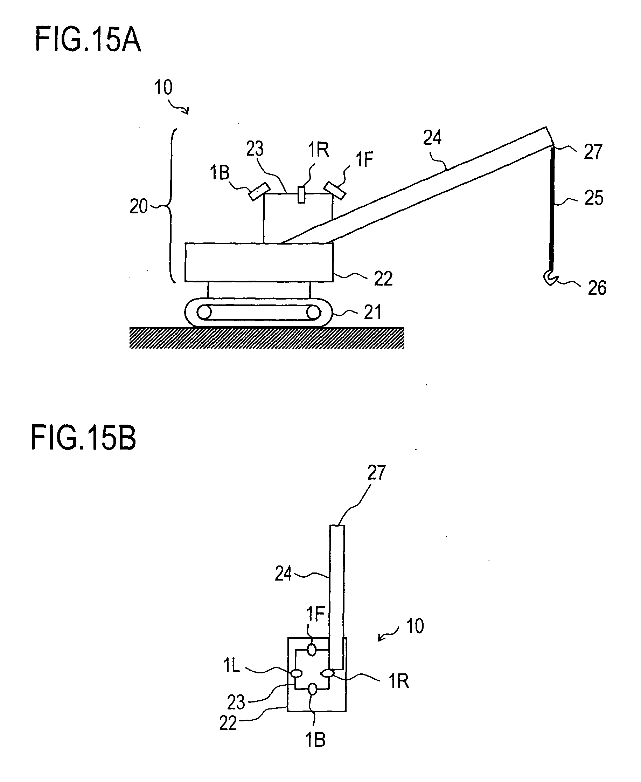

Fig. 15A is a side view showing an appearance of the crane mechanical apparatus 10 equipped with the visibility assisting system shown in Fig. 14, and Fig. 15B is a plan view of the crane mechanical apparatus 10 viewed from above. The crane mechanical apparatus 10 itself shown in Figs. 15A and 15B is the same as that according to the first embodiment. However, the machine body 20 of the crane mechanical apparatus 10 according to the present embodiment is equipped with four cameras for obtaining images of peripheries of the machine body 20. More specifically, the camera 1F, 1B, 1L and 1R having different viewpoints are attached respectively to the front, the rear, the left side and the right side of the cockpit box 23 of the crane mechanical apparatus 10 (however, the camera 1L is omitted in Fig. 15A). Note that it is possible to attach all or some of the cameras 1F, 1B, 1L and 1R to the rotating table 22.

The cameras IF, 1B, 1L and 1R are disposed on the machine body 20 so that the optical axis of the camera 1F is directed to the front tilting downward of the machine body 20, the optical axis of the camera 1B is directed to the rear tilting downward of the machine body 20, the optical axis of the camera 1L is directed to the left tilting downward of the machine body 20, and the optical axis of the camera 1R is directed to the right tilting downward of the machine body 20.

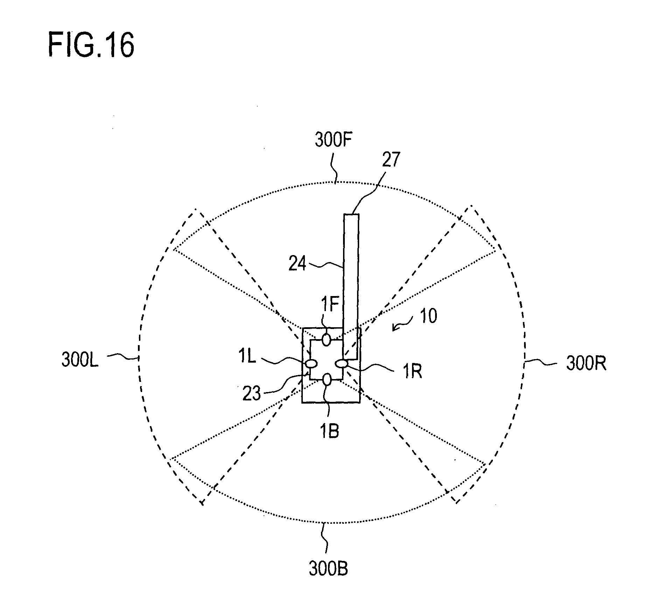

Fig. 16 is also a plan view of the crane mechanical apparatus 10 viewed from above in the same manner as Fig. 15B, but Fig. 16 shows fields of views of the individual cameras. In Fig. 16, the broken lined sector areas 300F, 300B, 300L and 300R show fields of views of the individual cameras IF, 1B, 1L and 1R, respectively.

The camera IF obtains an image of a subject (including the ground) positioned within a predetermined area on the front side of the machine body 20. The camera 1B obtains an image of a subject (including the ground) positioned within a predetermined area on the rear side of the machine body 20. The camera 1L obtains an image of a subject (including the ground) positioned within a predetermined area on the left side of the machine body 20. The camera 1R obtains an image of a subject (including the ground) positioned within a predetermined area on the right side of the machine body 20.

A part of the field of view of the camera 1F overlaps a part of the field of view of the camera 1R at the right front of the machine body 20. Apart of the field of view of the camera 1F overlaps a part of the field of view of the camera 1L at the left front of the machine body 20. A part of the field of view of the camera 1B overlaps a part of the field of view of the camera 1R at the right rear of the machine body 20. A part of the field of view of the camera 1B overlaps a part of the field of view of the camera 1L at the left rear of the machine body 20.

The signals indicating individual camera images of the cameras 1F, 1B, 1L and 1R are sent to the image processing device 2a. The image processing device 2a generates a display image from the camera images. The video signal indicating the display image is delivered to the display device 3, and the display device 3 displays the display image as a picture. The operating part 4 receives an operation by the user and transmits a signal corresponding to contents of the operation to the image processing device 2a. Each of the cameras (1F, 1B, 1L and 1R) obtains a camera image at a predetermined frame period (e.g., a period of 1/60 seconds). For example, every time when a new camera image is obtained, a display image is generated from the new camera image so that a display content of the display device 3 is updated.

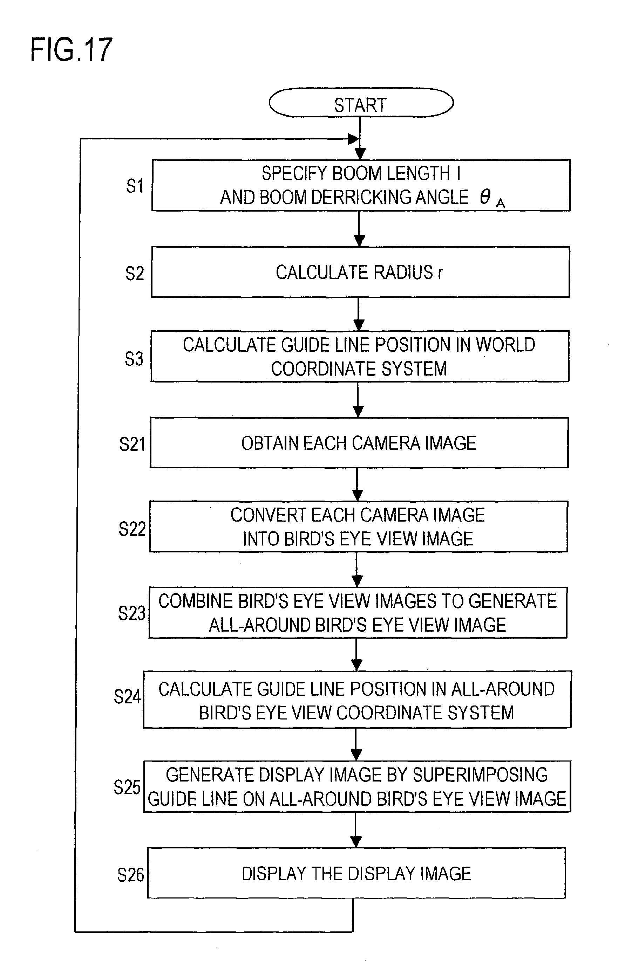

An operating procedure of the visibility assisting system shown in Fig. 14 will be described with reference to Fig. 17. Fig. 17 is a flowchart showing this operating procedure. The individual processes in steps S1 to S3 and S22 to S25 are performed by the image processing device 2a, the process in step S21 is performed by the cameras and the image processing device 2a, and the process in step S26 is performed by the display device 3.

First, the processes in the steps S1 to S3 are performed, and then the individual camera images of the cameras 1F, 1B, 1L and 1R are obtained in the step S21. The individual processes in the steps S1 to S3 are the same as those described above with reference to Fig. 6. As to the fourth embodiment, after the processes in the steps S1 to S3 and S21, the process goes to the step S22.

In the step S22, the individual camera images obtained in the step S21 are converted into the bird's eye view images. The method of converting one camera image into one bird's eye view image is the same as that described above in the second embodiment (or the third embodiment). However, the lens distortion correction is performed on the camera image to be a base of the bird's eye view image, and the camera image after the lens distortion correction is converted into the bird's eye view image. The bird's eye view images related to the cameras 1F, 1B, 1L and 1R are referred to as bird's eye view images 310F, 310B, 310L and 310R, respectively.

In the next step S23, the bird's eye view images 310B, 310L and 310R are rotated and moved in parallel with respect to a reference of the bird's eye view image 310F so that the coordinates of the images (310B, 310L and 310R) are converted into coordinates of the bird's eye view image 310F. This conversion is carried out based on previously known relative position information indicating a relative position among the cameras (1F, 1B, 1L and 1R), for example. After this conversion, the individual bird's eye view images are combined so as to generate an all-around bird's eye view image. The coordinate system by which the all-around bird's eye view image is defined is referred to as an all-around bird's eye view coordinate system. In case of this example, the all-around bird's eye view coordinate system coincides with the bird's eye view coordinate system of the camera 1F.

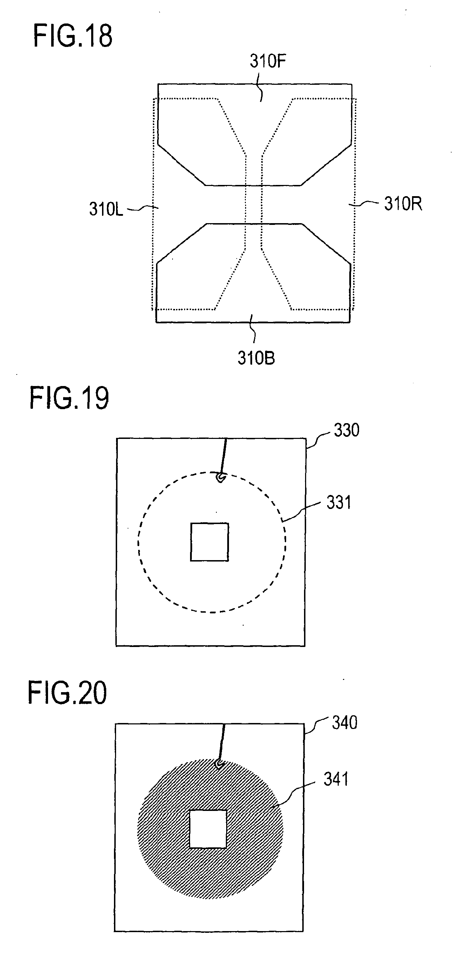

Fig. 18 shows the bird's eye view images 310F, 3 10B, 310L and 310R displayed in the all-around bird's eye view coordinate system. The bird's eye view images 310F and 3 10R overlap partially corresponding to the partial overlapping of the field of view between the cameras 1F and 1R. It is similar between the bird's eye view images 310F and 310L and the like. When the all-around bird's eye view image is generated by the image combination, the image of the overlapping part is generated by averaging pixel values of the images to be combined or by pasting an image to be combined with a boundary to be a defined combination boundary line. In any case, the images are combined so that the bird's eye view images can be joined smoothly at their junction.

Note that it is possible to generate in advance table data indicating a relationship of association between the coordinates of the camera images and the coordinates of the all-around bird's eye view coordinate system, and to generate the all-around bird's eye view image from the camera images by using the table data. In this case, it is not necessary to generate individual bird's eye view images.

After the all-around bird's eye view image is generated, the process goes to step S24. In the step S24, the coordinate values of the guide line in the all-around bird's eye view coordinate system are determined from the coordinate values of the guide line in the world coordinate system obtained in the step S3. Since the all-around bird's eye view coordinate system is the same as the bird's eye view coordinate system of the camera 1F, the content of process in the step S24 is the same as that in the step S12 in the second embodiment (see Fig. 10).

After that, the display image is generated in step S25 by superimposing the guide line in the all-around bird's eye view coordinate system having the coordinate values obtained in the step S24 on the all-around bird's eye view image. The generated display image is displayed on the display screen of the display device 3 in the step S26. After the step S26, the process goes back to the step S1 so that the individual processes described above are performed repeatedly.

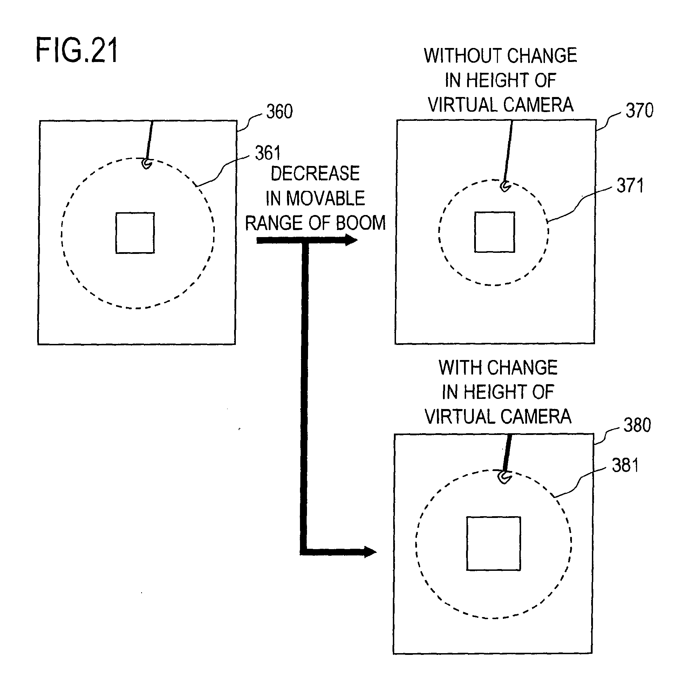

Fig. 19 shows an example of the display image that is generated and displayed in the step S25 and the step 26. The image denoted by reference numeral 330 is the display image. In the middle of the display image 330, an imaginary machine body of the crane mechanical apparatus 10 is shown. It is difficult for each of the camera to obtain an image of the entire machine body 20 of the crane mechanical apparatus 10. Therefore, the imaginary machine body that is drawn is different from the image of machine body 20 that is really obtained by each of the cameras (here, a part of the imaginary machine body is based on the real result of the obtained image). A part of the wire 25 and the hook 26 are shown at the upper middle part of the display image 330. Although the boom 24 of the crane mechanical apparatus 10 can be shown in the display image, the boom 24 is omitted in Fig. 19 (and in Figs. 20 and 21 that will be referred to later) for a sake of simple drawing.

In the display image 330, the broken lined circle denoted by reference numeral 331 is the superimposed guide line. Display color of the guide line is selected appropriately so that the guide line can be recognized visually in such a manner that it can be distinguished easily from other image areas. Thus, the same effect as that in the first and the second embodiment can be obtained, and a wide area can be confirmed on the display screen.

In addition, in the same manner as described above in the second embodiment, it is possible to perform a process for changing display color of the area that is closer to the crane mechanical apparatus 10 than the guide line (i.e., the security confirmation area) or other process instead of superimposing and displaying the guide line. For example, it is possible to generate and display a display image 340 as shown in Fig. 20. In the display image 340, the area that is closer to the crane mechanical apparatus 10 than the guide line can be distinguished from the other areas since display color of the former area (i.e., the security confirmation area) is changed. The hatched area 341 shown in Fig. 20 is the security confirmation area. In order to perform this method, a video signal (a luminance signal and/or a color signal) of a part area corresponding to the security confirmation area in the all-around bird's eye view image is processed based on the individual coordinate values of the guide line in the all-around bird's eye view coordinate system obtained in the step S24, so that the display image 340 can be obtained in the step S25. Then the all-around bird's eye view image after the process is delivered to the display device 3. In any case, the display image is generated so that the security confirmation area based on the radius r can be recognized visually on the display screen in such a manner that the security confirmation area can be distinguished from the other areas.

In addition, contents of the third embodiment described above can be applied to the present embodiment. A concrete example will be described with reference to Fig. 21. In Fig. 21, reference numerals 360, 370 and 380 denote the display images that can be generated, while broken lined circles 361, 371 and 381 denote guide lines in the display images 360, 370 and 380, respectively. It is supposed that the display image 360 was obtained in a reference condition.

It is supposed that the boom derricking angle $\theta_A$ has increased or the boom length 1 is decreased so that the movable range of the boom 24 (an outer periphery position of the movable range) becomes small with respect to the reference condition described above. In this case, if the height H of the virtual camera of each of the cameras is a fixed value, the display image changes from the display image 360 to the display image 370. In other words, a size of the guide line in the display image (a size of the security confirmation area on the display screen) is also decreased. On the other hand, if a height H of the virtual camera of each of the cameras is made lower than the reference condition by the quantity corresponding to the contraction of the movable range of the boom 24 (an outer periphery position of the movable range), the display image changes from the display image 360 to the display image 380. In other words, a size of the guide line in the display image (a size of the security confirmation area on the display screen) is maintained to be constant.

In this way, if the movable range of the boom 24 (an outer periphery position of the movable range) is changed due to a change of at least one of the boom derricking angle $\theta_A$ and the boom length 1, the height H of the virtual camera of each of the cameras may be changed dynamically so that the change in the size of the security confirmation area on the display image due to the above-mentioned change can be canceled. Thus, a size of the security confirmation area on the display screen is kept constant substantially. Since a large area can be shown in the case where a plurality of cameras are used for displaying the combined image like the present embodiment, such an adjustment of the display size of the security confirmation area is particularly effective for assistance of the security confirmation.

As described above in the third embodiment, it is possible to obtain a similar display image by electronic zooming instead of changing the height H of the virtual camera.

In addition, it is also possible to attach all or some of the cameras 1F, 1B, 1L and 1R to the boom 24. In this case, however, relative positions among the cameras, the rotating table 22 and the cockpit box 23 change in accordance with the change of the boom derricking angle $\theta_A$ and/or the boom length 1 (see Fig. 3). Therefore, it is necessary to adapt the visibility assisting system to be capable of recognizing the change of the relative positions in accordance with the change of the boom derricking angle $\theta_A$ and/or the boom length 1, and to reflect the change of the relative positions onto the coordinate conversion for obtaining the bird's eye view image from the camera image.

Fifth embodiment

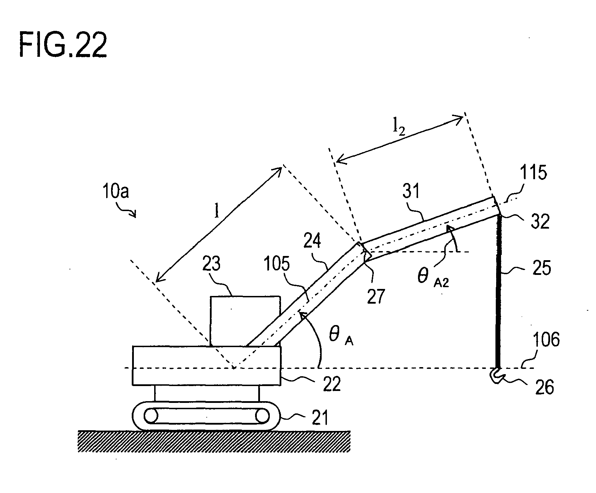

The crane mechanical apparatus to which the visibility assisting system according to the first to the fourth embodiments is applied can have various forms. For example, the visibility assisting system according to the first to the fourth embodiments can be applied also to a crane mechanical apparatus 10a shown in Fig. 22. Fig. 22 is a side view showing an appearance of the crane mechanical apparatus 10a.

The crane mechanical apparatus 10a includes the running gear 21, the rotating table 22, the cockpit box 23 and the boom 24, and further a link gib 31 is attached to the distal end part 27 of the boom 24. In other words, the crane mechanical apparatus 10a has a structure in which the link gib 31 is added to the crane mechanical apparatus 10 shown in Fig. 2A or the like. Except for this addition, the crane mechanical apparatuses 10 and 10a are basically the same. However, cameras are omitted in Fig. 22 for a sake of simple drawing.

An end of the boom 24 is fixed to the rotating table 22. The distal end part 27 of the boom 24 including the other end of the boom 24 is connected to the rod-like link gib 31. A derricking angle of the link gib 31 with respect to the boom 24 can be changed freely, and the operator of the crane mechanical apparatus 10a can change the derricking angle of the link gib 31 by operating an operating member disposed in the cockpit box 23. An end of the link gib 31 is fixed to the connecting part between the boom 24 and the link gib 31. A wire 25 that can be wound up or down is hung downward in the plumb direction from the distal end part 32 of the link gib 31 including the other end of the link gib 31. A hook 26 is attached to the lower end of the wire 25.

The machine body including the rotating table 22, the cockpit box 23, the boom 24 and the link gib 31 is placed on the running gear 21 so that it can rotate around the pivot axis that is a predetermined axis passing through the connecting part between the running gear 21 and the rotating table 22 and is parallel to the plumb line. The boom 24 and the link gib 31 rotate around the pivot axis when the rotating table 22 rotates. When the wire 25 is wound up in the state where a load (not shown) is hung by the hook 26 and the rotating table 22 is rotated, the load can be carried in the horizontal direction.

In Fig. 22, the boom derricking angle $\theta_A$ and the like are shown together. The boom derricking angle $\theta_A$ and the boom length 1 are the same as those described above in the first embodiment. The link gib 31 is regarded as a rectangular solid, and an acute angle formed between the central axis 115 of the link gib 31 in the longitudinal direction and the reference plane 106 that is parallel with the rotation plane is denoted by $\theta_{A2}$. The angle $\theta_{A2}$ indicates a connecting angle between the boom 24 and the link gib 31. The angle $\theta_{A2}$ is changed by rotating the link gib 31 around a fulcrum that is the connecting part between the boom 24 and the link gib 31.

The longitudinal direction of the link gib 31 is the direction connecting the connecting part between the boom 24 and the link gib 31 with the distal end part 32 of the link gib 31. A length of the link gib 31 1 in the longitudinal direction of the link gib 31 is denoted by $1_2$. Note that the central axis 105 of the boom 24 in the longitudinal direction and the central axis 115 of the link gib 31 in the longitudinal direction are on the same plane.

When the visibility assisting system according to the first to the fourth embodiments is applied to the crane mechanical apparatus 10a as shown in Fig. 22, one or more cameras are attached to the cockpit box 23 (or the rotating table 22 or the boom 24). Then, the display image should be generated and displayed by the method as described above in the first to the fourth embodiments. Here, since the link gib 31 exists, the calculation equation of the radius r necessary for determining the guide line is different. More specifically, if the visibility assisting system according to the first to the fourth embodiments is applied to the crane mechanical apparatus 10a, the radius r should be calculated in accordance with the calculation equation "$r = 1 \; 1 \cdot \cos\theta_A + 1_2 \cdot \cos\theta_{A2}$"

Note that it is possible to give information indicating the length $1_2$ to the image processing device (2 or 2a) in advance. Otherwise, it is possible to determine the length $1_2$ of the link gib 31 automatically by utilizing the method described in JP-A-H7-61777. In addition, it is possible to detect the connecting angle $\theta_{A2}$ by utilizing an angle detector (not shown) similar to the boom derricking angle detector.

The radius r is determined based on the state of the rotating body including the boom length 1 and the boom derricking angle $\theta_A$ so that the security confirmation area can be specified both in the case where the visibility assisting system is applied to the crane mechanical apparatus 10 shown in Fig. 2A or the like and in the case where it is applied to the crane mechanical apparatus 10a shown in Fig. 22. The rotating body of the crane mechanical apparatus 10 includes the boom 24. Since the rotating body of the crane mechanical apparatus 10a includes the boom 24 as well as the link gib 31, the state of the rotating body for the crane mechanical apparatus 10a includes the boom length 1 and the boom derricking angle $\theta_A$ as well as a length $1_2$ of the link gib 31 and a connecting angle $\theta_{A2}$

Variations

Variations or notes of the embodiment described above will be described below as Notes 1 to 4. Descriptions in the individual notes can be combined arbitrarily as long as no contradiction arises.

[Note 1]

In each of the embodiments described above, the movable crane is exemplified as the crane mechanical apparatus to which the visibility assisting system according to the present invention is applied. However, the visibility assisting system can be applied to other crane mechanical apparatus that is classified as other types than the movable crane. For example, the present invention can be applied also to a gib crane, an unloader or the like.

In addition, the present invention can be applied also to a mechanical apparatus that is not classified as a crane. For example, it is possible to apply the present invention to a shovel vehicle (not shown) equipped with a crane function. However, it is also possible to interpret that the shovel vehicle equipped with a crane function should be classified as a crane. The shovel vehicle has the structure that is common to the crane mechanical apparatus 10a shown in Fig. 22. As to the shovel vehicle, however, the member denoted by reference numeral 24 is called a boom in many cases, but the member denoted by reference numeral 31 is usually called an arm. An attachment such as a bucket or a breaker is attached to the distal end part of the arm.

[Note 2]

In the above description, the second embodiment (or the third embodiment) that is accompanied with the coordinate conversion into the bird's eye view coordinate system and the first embodiment that is not accompanied with the coordinate conversion are described separately. However, it is possible that the display method in each of the embodiments can be switched in the same visibility assisting system. For example, it is possible to select between the normal display method and the bird's eye view display method by an operation of the operating part 4 shown in Fig. 1. If the normal display method is selected, the display image shown in Fig. 8 or the like according to the first embodiment is generated and displayed. If the bird's eye view display method is selected, the display image shown in Fig. 11 or the like according to the second embodiment (or the third embodiment) is generated and displayed.

[Note 3]

The functions of the image processing device 2 shown in Fig. 1 or the functions of the image processing device 2a shown in Fig. 14 can be realized by hardware, software or a combination of hardware and software. It is possible to describe all or some of the functions realized by the image processing device (2 or 2a) as a program, which is executed by a computer for realizing all or some of the functions.

[Note 4]

It is possible to consider as follows, for example. One camera 1 or a plurality of cameras (1F, 1B, 1L and 1R) constitute a camera unit in each of the embodiments described above. The camera unit and the image processing device (2 or 2a) constitute a camera system. In addition, the image processing device (2 or 2a) is equipped with a bird's eye view converter for converting the camera image into the bird's eye view image or the all-around bird's eye view image.

**Claims**

1. A camera system comprising:

   a camera unit for obtaining an image of a periphery of a rotating body that is capable of performing a rotating motion; and
   an image processing device for generating a display image based on a camera image obtained by the camera unit, so that the display image can be delivered to a display device, wherein
   the image processing device generates the display image in such a manner that a specific image area corresponding to an outer periphery position of the rotating body within its movable range due to rotation of the rotating body can be recognized visually on a display screen of the display device.

2. The camera system according to claim 1, wherein
   the rotating body includes a rod-like main shaft member attached onto a rotating table that is capable of performing a rotating motion, in such a manner that the main shaft member can perform a derricking motion, and the rotating body rotates along with a rotation of the rotating table,
   the outer periphery position changes in accordance with a state of the rotating body including a length of the main shaft member and a derricking angle of the main shaft member with respect to the rotating table, and
   the image processing device determines a position of the specific image area on the display image in accordance with the state of the rotating body.

3. The camera system according to claim 1 or 2, wherein the image processing device generates the display image by superimposing an indicator corresponding to the outer periphery position on the camera image or by processing the camera image in accordance with the outer periphery position.

4. The camera system according to claim 1 or 2, wherein the image processing device includes a bird's eye view converter for converting the camera image into a bird's eye view image viewed from a viewpoint of a virtual camera, and the image processing device generates the display image by superimposing an indicator corresponding to the outer periphery position on the bird's eye view image or by processing the bird's eye view image in accordance with the outer periphery position.

5. The camera system according to claim 1 or 2, wherein
   the camera unit is made up of a plurality of cameras having different viewpoints for obtaining images of a periphery of the rotating body, and
   the image processing device includes a bird's eye view converter for generating a composite bird's eye view image by combining bird's eye view images each of which is obtained by converting each of the camera images into a bird's eye view image viewed from a viewpoint of a virtual camera, and the image processing device generates the display image by superimposing an indicator corresponding to the outer periphery position on the composite bird's eye view image or by processing the composite bird's eye view image in accordance with the outer periphery position.

6. The camera system according to claim 4 or 5, wherein the image processing device generates the display image in such a manner that when the movable range of the rotating body has changed, a change in a size of the specific image area on the display image due to the change of the movable range can be suppressed.

7. The camera system according to claim 6, wherein the image processing device suppresses the change in the size of the specific image area by changing a height of the viewpoint of the virtual camera in accordance with the change of the movable range of the rotating body when it has changed.

8. The camera system according to claim 2, wherein the main shaft member is a boom provided to a mechanical apparatus including a crane mechanical apparatus or a shovel vehicle.

9. A mechanical apparatus equipped with the camera system according to any one of claims 1 to 8, and the apparatus making the rotating body perform a rotating motion.

# FIG.1

```
┌──────────┐        ┌──────────────┐        ┌──────────┐
│          │   1    │    IMAGE     │   2    │          │   3
│  CAMERA  │───────▶│  PROCESSING  │───────▶│ DISPLAY  │
│          │        │    DEVICE    │        │  DEVICE  │
└──────────┘        │              │        └──────────┘
                    └──────────────┘                     4
                           ▲        ┌──────────────┐
                           │        │  OPERATING   │
                           └────────│     PART     │
                                    └──────────────┘
```

# FIG.2A

# FIG.2B

FIG.3

FIG.4

EP 2 003 018 A2

FIG.5

# FIG.6

```
                    ┌─────────────────┐
                    │      START       │
                    └─────────────────┘
                              │
                              ▼
        ┌──────┬────────────────────────────────────────┐
    S1  │      │  SPECIFY BOOM LENGTH  l                  │
        │      │  AND BOOM DERRICKING ANGLE  θ A          │
        └──────┴────────────────────────────────────────┘
                              │
                              ▼
        ┌──────┬────────────────────────────────────────┐
    S2  │      │  CALCULATE RADIUS r                      │
        └──────┴────────────────────────────────────────┘
                              │
                              ▼
        ┌──────┬────────────────────────────────────────┐
    S3  │      │  CALCULATE GUIDE LINE POSITION IN WORLD  │
        │      │  COORDINATE SYSTEM                       │
        └──────┴────────────────────────────────────────┘
                              │
                              ▼
        ┌──────┬────────────────────────────────────────┐
    S4  │      │  CONVERT BY PROJECTING GUIDE LINE ONTO   │
        │      │  COORDINATE SYSTEM OF IMAGING SURFACE    │
        └──────┴────────────────────────────────────────┘
                              │
                              ▼
        ┌──────┬────────────────────────────────────────┐
    S5  │      │  OBTAIN CAMERA IMAGE                     │
        └──────┴────────────────────────────────────────┘
                              │
                              ▼
        ┌──────┬────────────────────────────────────────┐
    S6  │      │  GENERATE DISPLAY IMAGE BY SUPERIMPOSING │
        │      │  GUIDE LINE ON CAMERA IMAGE              │
        └──────┴────────────────────────────────────────┘
                              │
                              ▼
        ┌──────┬────────────────────────────────────────┐
    S7  │      │  DISPLAY THE DISPLAY IMAGE               │
        └──────┴────────────────────────────────────────┘
```

FIG.7

# FIG.8

DISPLAY IMAGE
(NORMAL DISPLAY) 200

201

# FIG.9

DISPLAY IMAGE
(NORMAL DISPLAY) 210

211

# FIG.10

```
                    ( START )
                        │
                        ▼
        ┌─────────────────────────────────────┐
   S1   │   SPECIFY BOOM LENGTH l              │
        │   AND BOOM DERRICKING ANGLE  θ_A     │
        └─────────────────────────────────────┘
                        │
                        ▼
        ┌─────────────────────────────────────┐
   S2   │   CALCULATE RADIUS r                 │
        └─────────────────────────────────────┘
                        │
                        ▼
        ┌─────────────────────────────────────┐
   S3   │   CALCULATE GUIDE LINE POSITION IN   │
        │   WORLD COORDINATE SYSTEM            │
        └─────────────────────────────────────┘
                        │
                        ▼
        ┌─────────────────────────────────────┐
   S5   │   OBTAIN CAMERA IMAGE                │
        └─────────────────────────────────────┘
                        │
                        ▼
        ┌─────────────────────────────────────┐
   S11  │   CONVERT CAMERA IMAGE INTO          │
        │   BIRD'S EYE VIEW IMAGE              │
        └─────────────────────────────────────┘
                        │
                        ▼
        ┌─────────────────────────────────────┐
   S12  │   CALCULATE GUIDE LINE POSITION IN   │
        │   BIRD'S EYE VIEW COORDINATE SYSTEM  │
        └─────────────────────────────────────┘
                        │
                        ▼
        ┌─────────────────────────────────────┐
   S13  │   GENERATE DISPLAY IMAGE             │
        │   BY SUPERIMPOSING GUIDE LINE        │
        │   ON BIRD'S EYE VIEW IMAGE           │
        └─────────────────────────────────────┘
                        │
                        ▼
        ┌─────────────────────────────────────┐
   S14  │   DISPLAY THE DISPLAY IMAGE          │
        └─────────────────────────────────────┘
```

## FIG.11

DISPLAY IMAGE
(BIRD'S EYE VIEW DISPLAY) 220

221

## FIG.12

DISPLAY IMAGE
(BIRD'S EYE VIEW DISPLAY) 230

231

# FIG.13

250
251

INCREASE OF $\theta_A$ ⟹

260
261

BIRD'S EYE VIEW
CONVERSION
(H = H₁)

255
256

BIRD'S EYE VIEW
CONVERSION
(H = H₂ < H₁)

265
266

# FIG.14

1F — CAMERA →

1B — CAMERA →

1L — CAMERA →

1R — CAMERA →

2a
IMAGE PROCESSING DEVICE

3
DISPLAY DEVICE

4
OPERATING PART

## FIG.15A

## FIG.15B

FIG.16

300F

27

24

1F

10

300L

1L

1R

300R

23

1B

300B

# FIG.17

START

S1 | SPECIFY BOOM LENGTH l
AND BOOM DERRICKING ANGLE $\theta_A$

S2 | CALCULATE RADIUS r

S3 | CALCULATE GUIDE LINE POSITION IN WORLD
COORDINATE SYSTEM

S21 | OBTAIN EACH CAMERA IMAGE

S22 | CONVERT EACH CAMERA IMAGE
INTO BIRD'S EYE VIEW IMAGE

S23 | COMBINE BIRD'S EYE VIEW IMAGES TO GENERATE
ALL-AROUND BIRD'S EYE VIEW IMAGE

S24 | CALCULATE GUIDE LINE POSITION IN ALL-AROUND
BIRD'S EYE VIEW COORDINATE SYSTEM

S25 | GENERATE DISPLAY IMAGE BY SUPERIMPOSING
GUIDE LINE ON ALL-AROUND BIRD'S EYE VIEW IMAGE

S26 | DISPLAY THE DISPLAY IMAGE

FIG.18

310F

310L

310R

310B

FIG.19

330

331

FIG.20

340

341

# FIG.21

DECREASE
IN MOVABLE
RANGE OF BOOM

360
361

WITHOUT CHANGE
IN HEIGHT OF
VIRTUAL CAMERA

370
371

WITH CHANGE
IN HEIGHT OF
VIRTUAL CAMERA

380
381

# FIG.22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005186906 A
- JP 2000272445 A
- JP 2002314991 A
- JP 2002125224 A
- JP H761777 A
- JP 2006287892 A